# EUROPÄISCHE PATENTSCHRIFT

(11) **EP 3 500 444 B1**
(45) Veröffentlichungstag und Bekanntmachung des Hinweises auf die Patenterteilung: **30.12.2020**
(21) Anmeldenummer: 17730129.8
(22) Anmeldetag: 13.06.2017
(51) Int. Cl.: B60G 7/02

(54) **VERFAHREN ZUR HERSTELLUNG EINER LENKER-LAGERUNGSORDNUNG EINES KRAFTFAHRZEUGS SOWIE LAGERUNGSANORDNUNG**
METHOD FOR PRODUCING A LINK MOUNTING ARRANGEMENT OF A MOTOR VEHICLE, AND MOUNTING ARRANGEMENT
PROCÉDÉ POUR LA FABRICATION D'UN ENSEMBLE PALIER DE BRAS DE SUSPENSION D'UN VÉHICULE À MOTEUR ET ENSEMBLE PALIER

(30) Priorität: 19.08.2016 DE 102016215623
(43) Veröffentlichungstag der Anmeldung: 26.06.2019
(73) Patentinhaber: Volkswagen Aktiengesellschaft, 38440 Wolfsburg (DE)
(72) Erfinder: BEHN, Michael, 38551 Ribbesbüttel (DE)
(86) Internationale Anmeldenummer: PCT/EP2017/064461
(87) Internationale Veröffentlichungsnummer: WO 2018/033270

(56) Entgegenhaltungen:
- EP-A1- 2 910 454
- EP-A2- 0 306 626
- CN-A- 103 978 860
- CN-U- 204 077 797
- CN-Y- 201 105 621
- DE-A1-102014 116 077
- JP-A- H0 288 315
- JP-A- H07 257 424
- US-A- 6 131 930
- US-A1- 2006 181 043

## Beschreibung

Die Erfindung betrifft ein Verfahren zur Herstellung einer Lagerungsanordnung für einen an einem Hilfsrahmen eines Kraftfahrzeugs schwenkbar gelagerten oder lagerbaren Lenker einer Radaufhängung eines Kraftfahrzeugs gemäß der Merkmalskombination des Patentanspruchs 1 der Erfindung. Gemäß Patentanspruch 8 der Erfindung betrifft dieselbe ferner eine Lagerungsanordnung für besagten Lenker.

Eine für diese Gegenstände der Erfindung gattungsbildende Schrift ist die CN 103 978 860 A.

Aus der Praxis des Kraftfahrzeugbaus ist es allgemein bekannt, Lenker einer Radaufhängung eines Kraftfahrzeugs an einem Hilfsrahmen desselben schwenkbar zu lagern. Darüber hinaus ist es bekannt, Einstellvorrichtungen vorzusehen, vermittels derer das Fahrwerk bzgl. Spur und/oder Sturz einstellbar ist. Unter besagter Spur wird dabei eine bestimmte Stellung von linkem und rechtem Fahrzeugrad zueinander verstanden. Unter besagtem Sturz wird die von der Senkrechten abweichende Neigung eines Fahrzeugrades verstanden.

So beschreibt die DE 10 2006 046 179 B4 eine Einstellvorrichtung für eine Radaufhängung von Kraftfahrzeugen mit einem Radführungsteil, das an einer aufbauseitigen oder radträgerseitigen Lagerkonsole angelenkt ist, wobei eine das Lager durchdringende Schraube in Lang-Löchern der Lagerkonsole geführt ist und an der Schraube angeordnete Einstellscheiben vorgesehen sind, die mit ihrem Außenumfang an Anschlägen der Lagerkonsole anlaufen. Die Anschläge sind einstückig mit der Lagerkonsole ausgebildet. Die Einstellscheiben sind zentrisch zur Schraubenmittenachse angeordnet und an ihrem Außenumfang spiralförmig ausgebildet. Durch Verdrehen der Einstellscheiben kann die Schraube in den Lang-Löchern und damit verbunden das Radführungsteil relativ zur Lagerkonsole verschoben werden.

Die DE 10 2011 084 198 A1 beschreibt eine Achsjustierung für Achsen von Nutzfahrzeugen, umfassend eine Rahmeneinheit, ein Exzenterelement und eine Justiereinheit. Das Exzenterelement weist eine erste Kontur auf, über die eine der Einheiten (Rahmeneinheit oder Justiereinheit) mit dem Exzenterelement in Eingriff bringbar ist. Darüber hinaus weist das Exzenterelement eine zweite Kontur auf, über die die jeweils andere Einheit mit dem Exzenterelement in Eingriff bringbar ist. Die erste Kontur ist exzentrisch zur zweiten Kontur des Exzenterelements angeordnet. Über die zweite Kontur stützt sich das Exzenterelement an einem Befestigungsmittel bzw. Anschlag der Rahmeneinheit ab, welcher Anschlag einstückig mit der Rahmeneinheit ausgebildet ist.

Die DE 10 2011 121 917 A1 beschreibt ein erstes Lagerelement in Form eines Hilfsrahmens eines Kraftfahrzeugs , welcher Hilfsrahmen ein Lang-Loch aufweist, in dem ein Fahrwerkslenker verstellbar mittels einer als Exzenterscheibe ausgebildeten Unterlegscheibe gelagert ist. Die Exzenterscheibe steht mit ihrem äußeren Rand in Kontakt mit einem am Hilfsrahmen ausgebildeten Anschlag.

Die DE 10 2005 052 833 B4 offenbart eine Exzenteranordung zur Fahrwerkseinstellung, deren Exzenter sich jeweils an einer U-förmige Kulisse abstützen. Die Kulissen können jeweils an einem Schenkel einer U-förmigen Lagerkonsole ausgeformt sein. Ferner können die Kulissen auch als separat hergestellte Bauteile am besagten Schenkel befestigt sein, beispielsweise durch Schweißen.

Ferner ist aus der CN 204 077 797 U eine Vorrichtung zum Positionieren und Einstellen der Räder eines Automobils bekannt, welche von einer festen Lenkerstruktur ausgeht, um eine Einstellung am Befestigungspunkt von Lenker und Hilfsrahmen zu erreichen. Hierzu ist am Hilfsrahmens ein Abstandshalter mit einem Langloch angeschweißt. Unter Verwendung von Exzenterbolzen und Excenterscheibe wird der besagte Befestigungspunkt reguliert, um Vorspur und Sturzwinkel des betreffenden Rades einzustellen. Das Dokument CN 204 077 797 U offenbart sowohl die Merkmale des Oberbegriffs des Anspruchs 8, als auch ein Verfahren zur Herstellung einer Lagerungsanordnung für einen an einem Hilfsrahmen eines Kraftfahrzeugs schwenkbar gelagerten oder lagerbaren Lenker einer Radaufhängung des Kraftfahrzeugs, mit folgenden Schritten:
a) Bereitstellung des Hilfsrahmens, welcher einen ersten und einen zweiten Lagerflansch zur Lagerung des Lenkers aufweist,
b) Bereitstellung zumindest eines Vorprodukts einer Konsole,
c) stoffschlüssige Verbindung des Vorprodukts mit einem Lagerflansch des Hilfsrahmens durch Schweißen,
d) Ausbildung eines Lang-Loches im Vorprodukt, sowie
e) Ausbildung zumindest eines Anschlags am Vorprodukt für einen Verstellexzenter zur Fahrwerkseinstellung durch Prägen des Vorprodukts.

Des Weiteren ist aus der JP H07 257424 A eine Lagerungsanordnung für einen an einem Hilfsrahmen eines Kraftfahrzeugs schwenkbar gelagerten oder lagerbaren Lenker einer Radaufhängung des Kraftfahrzeugs bekannt. Die Lagerungsanordnung umfasst einen Hilfsrahmen, welcher einen ersten und einen zweiten Lagerflansch zur Lagerung des Lenkers aufweist. An einem der Lagerflansche ist ein Vorprodukt einer Konsole stoffschlüssig durch Schweißen angebracht. Am gefügten Vorprodukt sind zum einen ein Langloch und zum anderen Anschläge für einen zugeordneten Verstellexzenter zur Fahrwerkseinstellung ausgebildet.

Darüber hinaus ist auch durch offenkundige Vorbenutzung eine separat hergestellte Konsole zur Befestigung an einem Lagerflansch eines Hilfsrahmens eines Kraftfahrzeugs durch Schweißen bekannt, welche Konsole bereits ein Lang-Loch zur verstellbaren Aufnahme eines Lagerbolzens oder einer Schraube des Lagers eines Lenkers einer Radaufhängung sowie Anschläge für eine Exzenterscheibe zur vorbeschriebenen Fahrwerkseinstellung (Spur und/oder Sturz) aufweist. In der Praxis sind in diesem Zusammenhang jedoch nach Erstellung der Fügeverbindung Schweißverzüge zu verzeichnen, die zu erhöhten Toleranzen zwischen dem Langloch und den Anschlägen führen, woraus wiederum erhöhte Maßnahmen zum Ausgleich besagter Toleranzen resultieren. Hier setzt die nachfolgend beschriebene Erfindung an.

Aufgabe der Erfindung ist es, ein Verfahren zur Herstellung einer Lenker-Lagerungsanordnung anzugeben, vermittels dessen die vorbeschriebenen Nachteile des letztbeschriebenen Standes der Technik vermieden werden. Darüber hinaus ist es Aufgabe der Erfindung, eine Lagerungsanordnung für besagten Lenker zu schaffen.

Gelöst wird die gestellte Aufgabe demnach zunächst durch ein Verfahren zur Herstellung einer Lagerungsanordnung für einen an einem Hilfsrahmen eines Kraftfahrzeugs schwenkbar gelagerten oder lagerbaren Lenker einer Radaufhängung des Kraftfahrzeugs, mit folgenden nacheinander durchzuführenden Schritten:
a) Bereitstellung des Hilfsrahmens, welcher einen ersten und einen zweiten Lagerflansch zur Lagerung des Lenkers aufweist,
b) Bereitstellung zumindest eines Vorprodukts einer Konsole,
c) stoffschlüssige Verbindung des Vorprodukts mit einem Lagerflansch des Hilfsrahmens durch Schweißen,
d) Ausbildung eines Lang-Loches im Vorprodukt durch Stanzen desselben, sowie
e) Ausbildung zumindest eines Anschlags am Vorprodukt für einen Verstellexzenter zur Fahrwerkseinstellung durch Prägen des Vorprodukts.

Aufgrund des Umstandes, dass nunmehr die mechanische Bearbeitung des besagten Vorprodukts zur Erstellung des gewünschten Endprodukts in Form der durch Schweißen mit dem Hilfsrahmen verbundenen Konsole nach dem Fügeschritt durchgeführt wird, werden etwaige zu verzeichnende Schweißverzüge vorteilhafterweise kompensiert. Hierdurch ist eine hohe Genauigkeit bzgl. der Anordnung des zumindest einen Anschlags zum Lang-Loch erreichbar, welche kostenaufwendige Nacharbeiten, wie sie nach dem Stand der Technik auftreten können, entbehrlich macht.

Die Unteransprüche beschreiben bevorzugte Weiterbildungen oder Ausgestaltungen des erfindungsgemäßen Verfahrens.

Danach werden bevorzugt die Schritte d) und e) in einem Arbeitsgang durchgeführt, woraus insbesondere Einsparungen an Fertigungszeit resultieren. Im Hinblick auf den Schritt b) wird bevorzugt ein Vorprodukt der Konsole bereitgestellt, welches plattenförmig ausgebildet ist. Unter "plattenförmig" wird dabei ein derartiges Bauteil respektive Vorprodukt verstanden, welches im Verhältnis zu seiner Längs- und Quererstreckung eine verhältnismäßig geringe Dicke aufweist und dessen Quererstreckung bzw. Breite nicht ganz erheblich von der Länge abweicht. So kann das besagte Vorprodukt beispielsweise aus einem einfach und kostengünstig zu verarbeitenden Metallblech bestehen und konturengerecht aus einer Blechplatine ausgestanzt sein. Um bestimmten Steifigkeitsanforderungen gerecht zu werden, kann das bereitgestellte, plattenförmige Vorprodukt bereits eine randseitige Abkantung aufweisen. Um die weitere Bearbeitung des Vorprodukts zu optimieren, ist im Hinblick auf den Schritt b) bevorzugt vorgesehen, dass ein Vorprodukt der Konsole bereitgestellt wird, welches ein Vorloch aufweist, das vorteilhaft als Zentrierung für eine Stanz- und Prägevorrichtung fungieren kann. Weiter bevorzugt ist vorgesehen, dass im Hinblick auf den Schritt e) der zumindest eine Anschlag im Umform- bzw. Prägeprozess durch einfaches und kostengünstiges Abkanten einer durch Freischnitt gebildeten Lasche des besagten Vorprodukts ausgebildet wird. Wie die Erfindung schließlich noch vorsieht, werden die Schritte d) und e) bevorzugt durch eine im betreffenden Lagerflansch ausgebildete Montageöffnung hindurch durchgeführt, welche vorteilhaft den erforderlichen Freigang zur mechanischen Bearbeitung des Vorprodukts durch Stanzen und Prägen gewährleistet.

Die Aufgabe wird erfindungsgemäß weiterhin durch eine Lagerungsanordnung mit einer Merkmalskombination gemäß Anspruch 8 gelöst.

Demnach betrifft die Erfindung gemäß Anspruch 8 eine Lagerungsanordnung für einen an einem Hilfsrahmen eines Kraftfahrzeugs schwenkbar gelagerten oder lagerbaren Lenker einer Radaufhängung des Kraftfahrzeugs, mit einem Hilfsrahmen, welcher einen ersten und einen zweiten Lagerflansch zur Lagerung des Lenkers aufweist, wobei an einem der Lagerflansche stoffschlüssig durch Schweißen ein Vorprodukt einer Konsole angebracht ist und am gefügten Vorprodukt infolge zumindest eines nachgeschalteten Bearbeitungsprozesses zum einen durch Stanzen ein Lang-Loch und zum anderen zumindest ein Anschlag für einen zugeordneten Verstellexzenter zur Fahrwerkseinstellung ausgebildet sind, und wobei zur Durchführung des nachgeschalteten Bearbeitungsprozesses im betreffenden Lagerflansch eine Montageöffnung ausgebildet ist.

Nachstehend wird die Erfindung anhand eines in den Zeichnungen schematisch dargestellten Ausführungsbeispiels näher erläutert. Sie ist jedoch nicht auf dieses beschränkt, sondern erfasst alle durch die Patentansprüche definierten Ausgestaltungen. Es zeigen:
- Fig. 1: eine perspektivische Darstellung eines Hilfsrahmens eines Kraftfahrzeugs mit Lagerungsstellen für diverse Lenker einer Radaufhängung, wobei eine der Lagerungsstellen eine verfahrensgemäß hergestellte Lagerungsanordnung aufweist,
- Fig. 2: eine perspektivische Detailansicht der verfahrensgemäß hergestellten Lagerungsanordnung des Hilfsrahmens nach Fig. 1 für einen eine Spurstange ausbildenden Lenker (Einzelheit "Z" nach Fig. 1),
- Fig. 3: eine andere Ansicht besagter Einzelheit "Z",
- Fig. 4: ein für das erfindungsgemäße Verfahren wesentliches Vorprodukt in einer Einzelansicht,
- Fig. 5: eine Ansicht des Hilfsrahmens mit Blick durch eine Montageöffnung hindurch auf das mit dem Hilfsrahmen verschweißte Vorprodukt,
- Fig. 6: die besagte Ansicht nach Fig. 5 mit dem Vorprodukt in einem Zustand, bei dem dasselbe im Anschluss an den Schweißprozess eine mechanische Bearbeitung durch Stanzen und Umformen respektive Prägen zu einer fertigen Konsole zur Lagerung des Lenkers am Hilfsrahmen und zur Aufnahme eines Verstellexzenters zur Fahrwerkserstellung des Kraftfahrzeugs erfahren hat, und
- Fig. 7: im Hinblick auf den Bearbeitungszustand des Vorprodukts / der Konsole nach Fig. 6 eine weitere, perspektivische Ansicht der besagten Lagerungsanordnung.

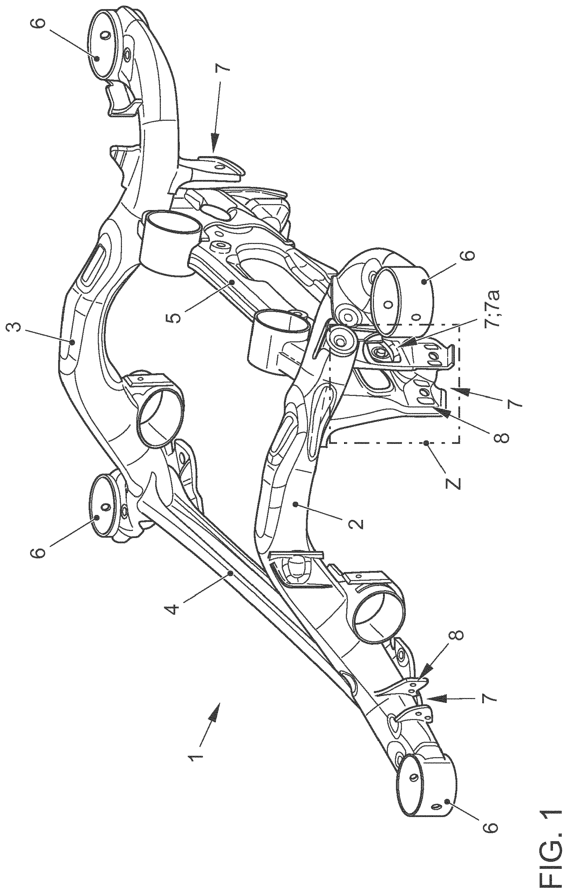

Fig. 1 zeigt lediglich beispielgebend einen Hilfsrahmen 1 in Form eines Hinterachs-Hilfsrahmens einer ungelenkten Achse eines nicht zeichnerisch dargestellten Kraftfahrzeugs. Der Hilfsrahmen 1 ist durch zwei in Fahrzeuglängsrichtung (X-Richtung) verlaufende Seitenteile 2, 3 gebildet, die mittels eines ersten, vorderen und eines zweiten, hinteren Querträgers 4, 5 untereinander verbunden sind. Der Hilfsrahmen 1 weist an den Enden der Seitenteile 2, 3 hohlzylindrische Anbindungsbutzen 6 auf, die bevorzugt unter Vermittlung nicht zeichnerisch dargestellter Elastomerlager (Gummi-Metall-Lager) der Abstützung und Befestigung des Hilfsrahmens 1 an der nicht zeichnerisch dargestellten Fahrzeugkarosserie dienen.

Des Weiteren weisen die Seitenteile 2, 3 diverse Anschraub- bzw. Lagerungsstellen 7 mit Löchern 8 zur Befestigung von Lenkern 9, u.a. einer Spurstange 9a, der Radaufhängung eines linken und rechten Fahrzeugrades auf. Die Erfindung wird beispielgebend im Weiteren anhand eines Lenkers 9 in Form besagter Spurstange 9a beschrieben.

Die Lagerungsstelle 7a für besagte Spurstange 9a ist durch einen ersten und einen zweiten Lagerflansch 10, 11 des Hilfsrahmens 1 gebildet, welche Lagerflansche 10, 11 parallel zueinander verlaufen (vgl. insbes. Fig. 1, 2 und 7). In den Lagerflanschen 10, 11 ist die Spurstange 9a über ein nicht zeichnerisch dargestelltes Gummi-Metall-Hülsen-Lager schwenkgelagert. Die Spurstange 9a ist an ihrem nicht gezeigten, der Lagerungsstelle 7a gegenüberliegenden Ende an einem Radträger der Radaufhängung angelenkt. Zur Fahrwerkseinstellung können Parameter der Radführung, wie Spur und Sturz, durch Verstellung der Schwenkachse 12 der Spurstange 9a relativ zu den die Lagerungsstelle 7a ausbildenden Lagerflanschen 10, 11 des Hilfsrahmens 1 verändert werden.

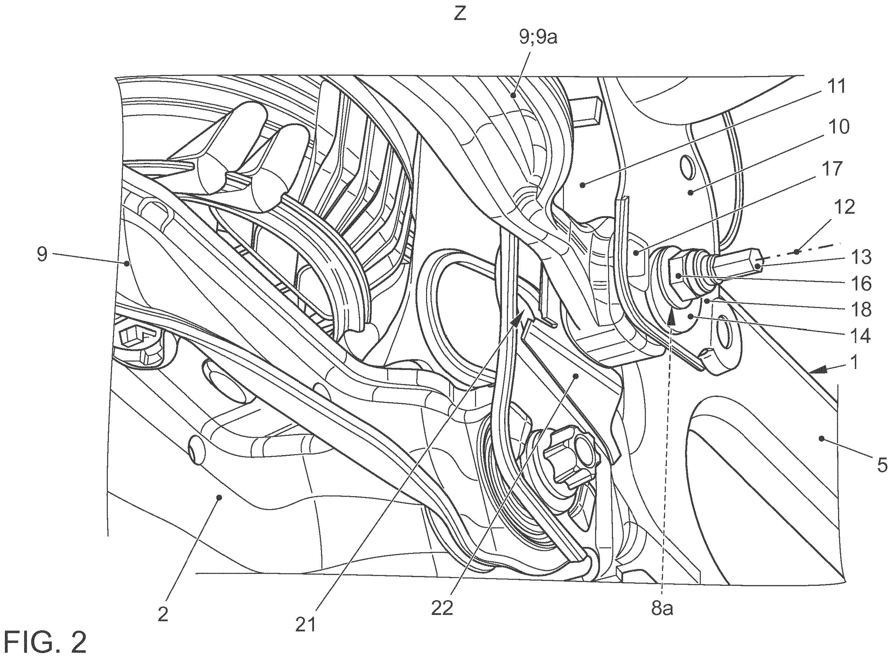

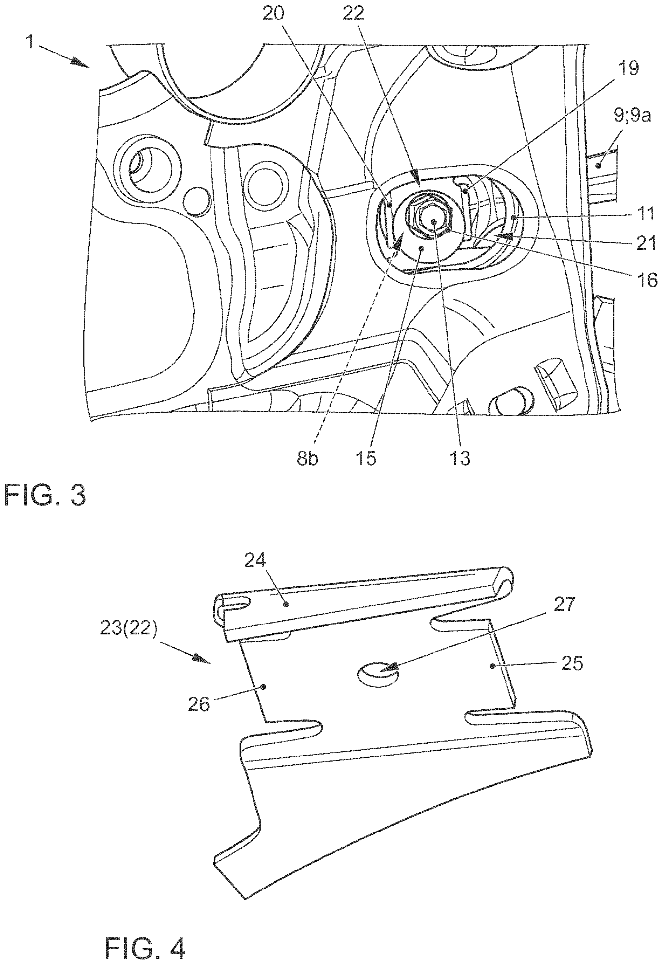

Hierzu sind einem das Gummi-Metall-Hülsen-Lager durchsetzenden Lagerbolzen 13 ein erster und ein zweiter Verstellexzenter 14, 15 zugeordnet (vgl. insbes. Fig. 2 und 3). Der Lagerbolzen 13 ist in den Lagerflanschen 10, 11 zugeordneten Lang-Löchern 8a, 8b verschiebbar geführt und mittels Schraubmutter 16 in der gewünschten Stellung relativ zu den Lagerflanschen 10, 11 festlegbar. Den Verstellexzentern 14, 15 ist beidenends der Lang-Löcher 8a, 8b je ein Anschlag 17, 18; 19, 20 zugeordnet.

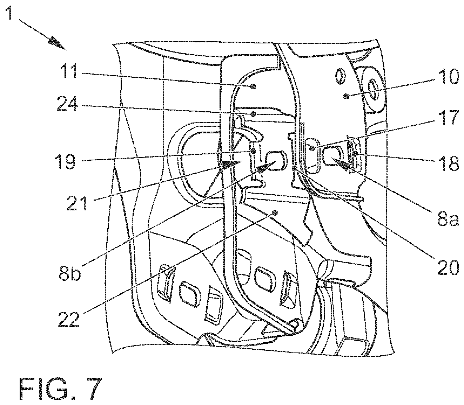

Gemäß diesem Ausführungsbeispiel ist ein Lang-Loch 8a unmittelbar durch den ersten Lagerflansch 10 gebildet. Dieser Lagerflansch 10 bildet gleichzeitig einstückig besagte Anschläge 17, 18 für den ersten Verstellexzenter 14 aus (vgl. insbes. Fig. 2 und 7). Der andere, zweite Lagerflansch 11 bildet demgegenüber im relevanten Bereich eine Montageöffnung 21 aus (vgl. insbes. Fig. 2, 3, 5-7).
Über die besagte Montageöffnung 21 erstreckt sich eine mit dem betreffenden Lagerflansch 11 fest verbundene Konsole 22, welche ihrerseits ein Lang-Loch 8b und die Anschläge 19, 20 für den zweiten Verstellexzenter 15 ausbildet. Die Konsole 22 ist stoffschlüssig durch Schweißung mit dem zweiten Lagerflansch 11 des Hilfsrahmens 1 verbunden.

Um dem eingangs erläuterten, sich nach dem Stand der Technik nachteilig auf die Maßhaltigkeit des Lang-Loches 8b und der Anschläge 19, 20 der Konsole 22 sowie der Anordnung derselben zueinander infolge eines erhöhte Toleranzen bewirkenden Schweißverzuges zu begegnen, werden die nachfolgend beschriebenen Verfahrensschritte zur Ausbildung der durch die Konsole 22 bewirkten Lagerungsanordnung favorisiert.

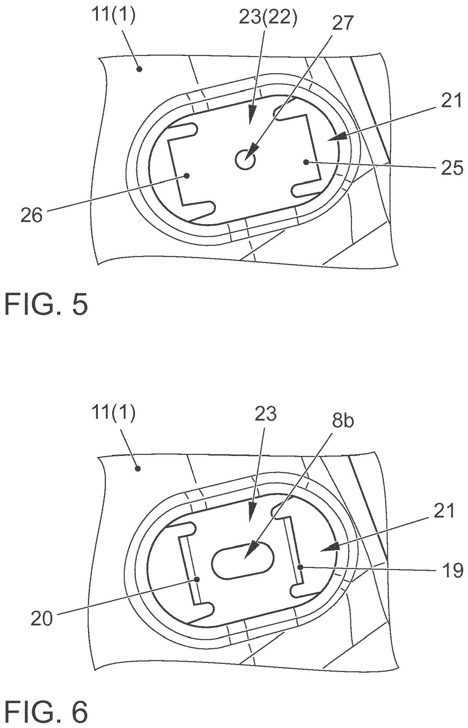

Danach ist vorgesehen, dass zunächst ein Vorprodukt 23 bzw. Halbfabrikat der Konsole 22 bereit gestellt wird, welches mit dem zweiten Lagerflansch 11 des ebenfalls bereitgestellten Hilfsrahmens 1 durch Schweißung fest verbunden wird. Gemäß den Fig. 4 und 5 ist das besagte Vorprodukt 23 im Wesentlichen plattenförmig ausgebildet und weist gemäß diesem Ausführungsbeispiel randseitig eine Abkantung 24 auf, die insbesondere der Versteifung des Vorprodukts 23 dient. Das Vorprodukt 23 ist bevorzugt konturengerecht aus einer Blechplatine aus Metallblech ausgestanzt und in einem Arbeitsgang mit besagter Abkantung 24 versehen. Das Vorprodukt 23 weist darüber hinaus zwei gegenüberliegend angeordnete, durch Freischnitt gebildete Laschen 25, 26 sowie in einem Bereich zwischen denselben ein sogenanntes Vorloch 27 auf.

An den Fügeprozess durch Schweißen schließen sich ein Stanz- und Prägeprozess an. Beide letztgenannten Prozesse werden bevorzugt in einem Arbeitsgang mittels einer nicht zeichnerisch dargestellten Stanz- und Prägevorrichtung durchgeführt, welche durch die Montageöffnung 21 hindurch am Vorprodukt 23 angreift und dieses bearbeitet. Das Vorloch 27 fungiert in vorteilhafter Weise als Zentrierung für die Stanz- und Prägevorrichtung.

Durch den Stanzprozess wird/ist das besagte Lang-Loch 8b im Vorprodukt 23 ausgebildet. Der Prägeprozess bewirkt die Ausbildung der Anschläge 19, 20, indem die durch Freischnitt gebildeten Laschen 25, 26 gemäß diesem Ausführungsbeispiel orthogonal zur Ebene des Vorprodukts 23 umgebogen werden, vorliegend zur Montagöffnung 21 hin (vgl. insbes. Fig. 2, 3, 6 und 7).

Das vorstehende Ausführungsbeispiel stellt auf einen Lenker 9 in Form einer Spurstange 9a sowie unter Zuhilfenahme eines Vorprodukts 23 auf lediglich eine erfindungsgemäß erstellte Lagerungsanordnung ab. Selbstverständlich können je Lagerungsstelle 7a auch zwei derartige Lagerungsanordnungen vorgesehen werden, die jeweils durch ein angeschweißtes Vorprodukt 23, dass nachträglich besagte mechanische Bearbeitung der vorbeschriebenen Art erfährt, gebildet sind (nicht zeichnerisch dargestellt). Darüber hinaus beschränkt sich die Erfindung nicht auf besagte Spurstange 9a, sondern erfasst jedweden am Hilfsrahmen schwenkgelagerten Lenker 9, dessen Lagerung gegebenenfalls eine Verstellung der vorbeschriebenen Art aufweisen soll.

### Bezugszeichenliste

- 1: Hilfsrahmen
- 2: Seitenteil
- 3: Seitenteil
- 4: Querträger
- 5: Querträger
- 6: Anbindungsbutzen
- 7: Lagerungsstelle
- 7a: Lagerungsstelle
- 8: Löcher
- 8a: Lang-Loch
- 8b: Lang-Loch
- 9: Lenker
- 9a: Spurstange
- 10: Lagerflansch
- 11: Lagerflansch
- 12: Schwenkachse
- 13: Lagerbolzen
- 14: Verstellexzenter
- 15: Verstellexzenter
- 16: Schraubmutter
- 17: Anschlag
- 18: Anschlag
- 19: Anschlag
- 20: Anschlag
- 21: Montageöffnung
- 22: Konsole
- 23: Vorprodukt
- 24: Abkantung
- 25: Lasche
- 26: Lasche
- 27: Vorloch

## Patentansprüche

1. Verfahren zur Herstellung einer Lagerungsanordnung für einen an einem Hilfsrahmen (1) eines Kraftfahrzeugs schwenkbar gelagerten oder lagerbaren Lenker (9, 9a) einer Radaufhängung des Kraftfahrzeugs, mit folgenden nacheinander durchzuführenden Schritten:
a) Bereitstellung des Hilfsrahmens (1), welcher einen ersten und einen zweiten Lagerflansch (10, 11) zur Lagerung des Lenkers (9, 9a) aufweist,
b) Bereitstellung zumindest eines Vorprodukts (23) einer Konsole (22),
c) stoffschlüssige Verbindung des Vorprodukts (23) mit einem Lagerflansch (11) des Hilfsrahmens (1) durch Schweißen,
d) Ausbildung eines Lang-Loches (8b) im Vorprodukt (23) durch Stanzen desselben, sowie
e) Ausbildung zumindest eines Anschlags (19, 20) am Vorprodukt (23) für einen Verstellexzenter (15) zur Fahrwerkseinstellung durch Prägen des Vorprodukts (23).

2. Verfahren nach Anspruch 1, **dadurch gekennzeichnet, dass** die Schritte d) und e) in einem Arbeitsgang durchgeführt werden.

3. Verfahren nach Anspruch 1 oder 2, **dadurch gekennzeichnet, dass** im Hinblick auf den Schritt b) ein Vorprodukt (23) der Konsole (22) bereitgestellt wird, welches plattenförmig ausgebildet ist.

4. Verfahren nach Anspruch 3, **dadurch gekennzeichnet, dass** das bereitgestellte, plattenförmige Vorprodukt (23) zumindest eine randseitige Abkantung (24) zur Versteifung des Vorprodukts (23) aufweist.

5. Verfahren nach einem der Ansprüche 1 bis 4, **dadurch gekennzeichnet, dass** im Hinblick auf den Schritt b) ein Vorprodukt (23) der Konsole (22) bereitgestellt wird, welches ein Vorloch (27) aufweist.

6. Verfahren nach einem der Ansprüche 1 bis 5, **dadurch gekennzeichnet, dass** im Hinblick auf den Schritt e) der zumindest eine Anschlag (19, 20) im Prägeprozess durch Abkanten einer durch Freischnitt gebildeten Lasche (25, 26) des besagten Vorprodukts (23) ausgebildet wird.

7. Verfahren nach einem der Ansprüche 1 bis 6, **dadurch gekennzeichnet, dass** die Schritte d) und e) durch eine im betreffenden Lagerflansch (11) ausgebildete Montageöffnung (21) hindurch durchgeführt werden.

8. Lagerungsanordnung für einen an einem Hilfsrahmen (1) eines Kraftfahrzeugs schwenkbar gelagerten oder lagerbaren Lenker (9, 9a) einer Radaufhängung des Kraftfahrzeugs, mit einem Hilfsrahmen (1), welcher einen ersten und einen zweiten Lagerflansch (10, 11) zur Lagerung des Lenkers (9, 9a) aufweist, wobei an einem der Lagerflansche (10, 11) stoffschlüssig durch Schweißen ein Vorprodukt (23) einer Konsole (22) angebracht ist, **dadurch gekennzeichnet dass** am gefügten Vorprodukt (23) infolge zumindest eines nachgeschalteten Bearbeitungsprozesses zum einen durch Stanzen ein Lang-Loch (8b) und zum anderen zumindest ein Anschlag (19, 20) für einen zugeordneten Verstellexzenter (15) zur Fahrwerkseinstellung ausgebildet sind, und wobei zur Durchführung des nachgeschalteten Bearbeitungsprozesses im betreffenden Lagerflansch (11) eine Montageöffnung (21) ausgebildet ist.

## Claims

1. Method for producing a bearing arrangement for a suspension arm (9, 9a) of a wheel suspension of the motor vehicle, which suspension arm is pivotably mounted or can be pivotably mounted on an auxiliary frame (1) of a motor vehicle, having the following steps to be carried out in succession:
a) provision of the auxiliary frame (1) which has a first and a second bearing flange (10, 11) for mounting the suspension arm (9, 9a),
b) provision of at least one preliminary product (23) of a bracket (22),
c) material bonding of the preliminary product (23) to a bearing flange (11) of the auxiliary frame (1) via welding,
d) formation of a long hole (8b) in the preliminary product (23) by punching said preliminary product, and
e) formation of at least one stop (19, 20) on the preliminary product (23) for an adjustable eccentric (15) for adjusting the chassis by impressing the preliminary product (23).

2. Method according to claim 1, **characterized in that** steps d) and e) are implemented in one work step.

3. Method according to claim 1 or 2, **characterized in that,** with regard to step b), a preliminary product (23) of the bracket (22) is provided, which is formed in the shape of a plate.

4. Method according to claim 3, **characterized in that** the provided plate-shaped preliminary product (23) has at least one edge-side chamfer (24) to reinforce the preliminary product (23).

5. Method according to one of claims 1 through 4, **characterized in that,** with regard to step b), a preliminary product (23) of the bracket (22) is provided, which has a prepunch (27).

6. Method according to one of claims 1 through 5, **characterized in that,** with regard to step e), the at least one stop (19, 20) is formed in the impressing process by bending a clip (25, 26) of the specified preliminary product (23), which clip is formed by a free punch.

7. Method according to one of claims 1 through 6, **characterized in that** steps d) and e) are implemented through an installation opening (21) formed in the respective bearing flange (11).

8. Bearing arrangement for a suspension arm (9, 9a) of a wheel suspension of a motor vehicle, which suspension arm is pivotably mounted or can be pivotably mounted on an auxiliary frame (1) of the motor vehicle, having an auxiliary frame (1) which has a first and second bearing flange (10, 11) for supporting the suspension arm (9, 9a), wherein a preliminary product (23) of a bracket (22) is materially bonded via welding to one of the bearing flanges (10, 11), **characterized in that,** at the joined preliminary product (23), as a result of at least one downstream machining process a long hole (8b) is on the one hand formed via punching, and on the other hand at least one stop (19, 20) for an associated adjustable eccentric (15) for chassis adjustment is formed; and wherein an installation opening (21) is formed in the appertaining bearing flange (11) for implementation of the downstream machining process.

## Revendications

1. Procédé pour la fabrication d'un ensemble palier de bras de suspension (9, 9a) d'une suspension de roue d'un véhicule à moteur, le bras de suspension étant ou pouvant être monté pivotant sur un faux-châssis (1) du véhicule à moteur, comprenant les étapes suivantes à exécuter successivement :
a) utilisation du faux-châssis (1), qui comporte une première et une seconde bride de palier (10, 11) pour le logement du bras de suspension (9, 9a),
b) utilisation d'au moins un demi-produit (23) d'une console (22),
c) assemblage par liaison de matière du demi-produit (23) avec une bride de palier (11) du faux-châssis (1) par soudage,
d) réalisation d'un trou oblong (8b) dans le demi-produit (23) par poinçonnage de celui-ci, ainsi que
e) réalisation d'au moins une butée (19, 20) sur le demi-produit (23) pour un excentrique de réglage (15) destiné au réglage du châssis, par estampage du demi-produit (23).

2. Procédé selon la revendication 1, **caractérisé en ce que** les étapes d) et e) sont effectuées en une opération.

3. Procédé selon la revendication 1 ou 2, **caractérisé en ce que,** en ce qui concerne l'étape b), un demi-produit (23) de la console (22), qui est réalisé en forme de plaque, est utilisé.

4. Procédé selon la revendication 3, **caractérisé en ce que** le demi-produit (23) en forme de plaque utilisé comporte au moins un repli (24) en bordure pour le renforcement du demi-produit (23).

5. Procédé selon l'une quelconque des revendications 1 à 4, **caractérisé en ce que,** en ce qui concerne l'étape b), un demi-produit (23) de la console (22), qui comporte un avant-trou (27), est utilisé.

6. Procédé selon l'une quelconque des revendications 1 à 5, **caractérisé en ce que,** en ce qui concerne l'étape e), l'au moins une butée (19, 20) est réalisée dans le processus d'estampage par repli d'une languette (25, 26) dudit demi-produit (23) formée par découpe non guidée.

7. Procédé selon l'une quelconque des revendications 1 à 6, **caractérisé en ce que** les étapes d) et e) sont effectuées à travers une ouverture de montage (21) réalisée dans la bride de palier (11) concernée.

8. Ensemble palier pour un bras de suspension (9, 9a) d'une suspension de roue d'un véhicule à moteur, le bras de suspension étant ou pouvant être monté pivotant sur un faux-châssis (1) du véhicule à moteur, comprenant un faux-châssis (1) qui comporte une première et une seconde bride de palier (10, 11) pour le logement du bras de suspension (9, 9a), un demi-produit (23) d'une console (22) étant monté avec liaison de matière par soudage sur une des brides de palier (10, 11), **caractérisé en ce que,** sont réalisés sur le demi-produit (23) assemblé, par suite d'au moins un processus de traitement subséquent, d'une part un trou oblong (8b) par poinçonnage et d'autre part au moins une butée (19, 20) pour un excentrique de réglage (15) associé destiné au réglage du châssis, et une ouverture de montage (21) étant réalisée dans la bride de palier (11) concernée pour l'exécution du processus de traitement subséquent.
